(19) Europäisches Patentamt

European Patent Office

Office européen des brevets

(11) **EP 1 029 711 A2**

(12) **EUROPÄISCHE PATENTANMELDUNG**

(43) Veröffentlichungstag:
23.08.2000 Patentblatt 2000/34

(51) Int. Cl.⁷: **B60C 5/20**, B60C 5/24, B60C 5/00

(21) Anmeldenummer: 00103178.0

(22) Anmeldetag: 16.02.2000

(84) Benannte Vertragsstaaten:
**AT BE CH CY DE DK ES FI FR GB GR IE IT LI LU MC NL PT SE**
Benannte Erstreckungsstaaten:
**AL LT LV MK RO SI**

(30) Priorität: **16.02.1999 DE 29902733 U**
**13.04.1999 DE 29906660 U**

(71) Anmelder:
**Continental Aktiengesellschaft**
**30165 Hannover (DE)**

(72) Erfinder:
• **Brügmann, Claus**
**23898 Kühsen (DE)**
• **Brügmann, Christoph**
**42487 Wülfrath (DE)**
• **Strothmann, Eckhard**
**33790 Halle-Sandforth (DE)**

(54) **Vorrichtung zur Beeinflussung von Reifeneigenschaften und Fahrzeugluftreifen**

(57) Vorrichtung zur Beeinflussung von Eigenschaften eines elastischen Reifens (10), insbesondere eines Reifens (10) eines Fahrzeuges, wobei innerhalb des Reifens (10) ein Medium, beispielsweise Luft, angeordnet ist, wobei der Reifen (10) wenigstens zwei kammerartige Räume (1-4) aufweist, die durch Einschnürungen (5) voneinander getrennt sind, durch welche das Medium bei Drehung des Reifens (10) strömt.

figur 1

**Beschreibung**

Die Erfindung betrifft eine Vorrichtung zur Beeinflussung der Eigenschaften eines elastischen Reifens, insbesondere eines Reifens eines Fahrzeuges, wobei innerhalb des Reifens ein Medium, beispielsweise Luft, angeordnet ist, sowie einen Fahrzeugluftreifen, insbesondere für landwirtschaftliche Fahrzeuge, Baufahrzeuge, Geländefahrzeuge etc., mit einem durch eine Felge und eine Decke oder durch einen Schlauch innerhalb der Decke begrenzten, ringförmigen Luftraum.

Beim Fahren auf weichem Untergrund, also etwa auf Ackerflächen, auf Sand oder Schnee ist im allgemeinen eine Verringerung des Luftdrucks in den Reifen vorteilhaft, da dadurch die Aufstandsfläche vergrößert wird. Dadurch wird die Druckbelastung von Ackerböden und deren stets unerwünschte, übermäßige Verdichtung verringert. Im übrigen führt die größere Aufstandsfläche auch dazu, dass die Räder weniger tief in den Boden oder auch bei anderen Anwendungsfällen in einen weichen Untergrund wie etwa Sand, Schnee oder dergleichen einsinken.

Auf der anderen Seite erfordert das Fahren auf befestigten Straßen und mit zumeist höherer Geschwindigkeit im Interesse der Fahrstabilität einen höheren Luftdruck. So ist es beispielsweise in der Landwirtschaft durchaus üblich, beim Arbeiten auf Ackerflächen den Luftdruck der Reifen zu senken und andererseits wieder zu erhöhen, wenn in nennenswertem Umfange Straßenfahrten beabsichtigt sind. Dieses Verfahren ist naturgemäß umständlich und fordert eine Druckerhöhung oder Drucksenkung in Verbindung mit einer genauen Druckkontrolle an allen Rädern und darüber hinaus einen Kompressor für die Druckerhöhung.

Bekannt sind daher auch automatische Druckregelanlagen für landwirtschaftliche Fahrzeuge oder Militärfahrzeuge, die es gestatten, die jeweilige Anpassung an den Luftdruck vorzunehmen. Diese Anlagen sind jedoch sehr aufwendig und teuer und arbeiten mit nicht unerheblicher Verzögerung.

Insbesondere für die Landwirtschaft werden heute aufwendige derartige Systeme zur Regulierung des Luftdruckes in den Reifen angeboten, so genannte Reifendruckregelanlagen. Diese Systeme erlauben eine Anpassung des Luftdruckes auf verschiedene Anforderungen. So wird bei Straßenfahrt ein ausreichend hoher Reifendruck gewünscht, denn bei niedrigen Reifeninnendrücken steigt der Rollwiderstand, der Reifenverschleiß und die Überhitzungsgefahr mit zunehmender Geschwindigkeit deutlich an und die Tragfähigkeit des Reifens nimmt mit zunehmender Geschwindigkeit in der Regel ab. So hat ein um 30 % zu niedriger Luftdruck eine Verdoppelung des Verschleißes der Reifen zur Folge (Zeitschrift „Profi", Nr. 12, 1993, Seite 83). Auf dem Acker jedoch wandeln sich die Anforderungen an den Reifen. Eine Verringerung des Luftdruckes in den Reifen bedingt stärkeres Walken der Reifen und führt damit zu einer Erhöhung der Reifenaufstandsfläche. Das wiederum hat nachhaltige Folgen für den Bodendruck und die Zugkraft. Eine Verminderung des Luftdruckes von 1,2 auf 0,5 bar verringert den Bodendruck um etwa 33 %, und im gleichen Ausmaß steigt das Zugkraftvermögen (Zeitschrift „Profi", Nr. 10, 1995, Seite 51). Darüber hinaus erhöhen niedrige Luftdrücke in den Reifen den Fahrkomfort bei Bodenunebenheiten, verbessern die Selbstreinigung des Profils der Reifen und vermindern den Rollwiderstand auf weichen Böden.

Um diesen Anforderungen gerecht zu werden, bieten verschiedene Hersteller Systeme an, die es erlauben, den Luftdruck in den Reifen während der Fahrt zu ändern. Die Systeme der verschiedenen Hersteller sind im Grundaufbau gleich. Die Ventile der Reifen sind über einen Drehüberträger und ein Leitungssystem mit einem Kessel und einem zugehörigen Kompressor verbunden. Die Anpassung des Reifendruckes wird über steuerbare Ventile erreicht.

Je nach Hersteller sind für derartige Systeme pro Fahrzeug ca. 5.000,--DM aufzuwenden (Zeitschrift „Profi", Nr. 10, 1995, Seite 53). Nachteilig ist auch, dass die Regelungsdauer zwischen Straßen- und Feldluftdruck, abhängig von zahlreichen Einflussfaktoren (wie z.B. Reifenvolumen, gewünschte Luftdruckunterschiede usw.), fünf Minuten und mehr betragen kann. Darüber hinaus stellt der Einsatz dieser aufwendigen Systeme eine weitere Fehlerquelle in einem Fahrzeug dar und verursacht zusätzlichen Betriebs- und Wartungsaufwand. Nachteilig ist auch die Belastung des Fahrers durch die zusätzliche Überwachung und Bedienung der Reifendruckregelanlage.

Die Aufgabe der Erfindung besteht darin, dass eine Vorrichtung gemäß dem Oberbegriff des Anspruches 1 zu schaffen, die die Nachteile des Standes der Technik vermeidet, sowie darin, einen Fahrzeugluftreifen zu schaffen, der ohne Änderung des Luftdrucks sich selbsttätig auf einen straßentauglichen oder geländetauglichen Zustand einstellt.

Diese Aufgabe löst die Erfindung mit den Merkmalen des Anspruchs 1. Weitere vorteilhafte Ausbildungen sind in den Unteransprüchen enthalten. Ein erfindungsgemäßer Fahrzeugluftreifen ist durch die Merkmale des Anspruchs 13 beschrieben.

Dabei weist der Reifen 10 wenigstens zwei kammerartige Räume (1-4) auf, die durch Einschnürungen 5 voneinander getrennt sind, durch welche das Medium bei Drehung des Reifens 10 strömt. Als Medium kann prinzipiell jede strömungsfähige Substanz (Gase, Flüssigkeiten) verwendet werden. In besonderer Weise eignet sich Luft. Im Folgenden wird daher aus Gründen der Einfachheit der Begriff Luft anstelle von Medium gebraucht.

Das Prinzip der Erfindung besteht im Wesentlichen darin, durch Vorsehen von Einschnürungen 5 eine Beeinflussung von Luftströmungen innerhalb des Reifens 10 zu schaffen, die sich auf die Reifeneigenschaften auswirken.

Unter beeinflussbaren Reifeneigenschaften im Sinne dieser Erfindung zählen insbesondere der Bodendruck des Fahrzeuges, der Reifenverschleiß, der Rollwiderstand, die Zugkraft, der Fahr- und der Federkomfort.

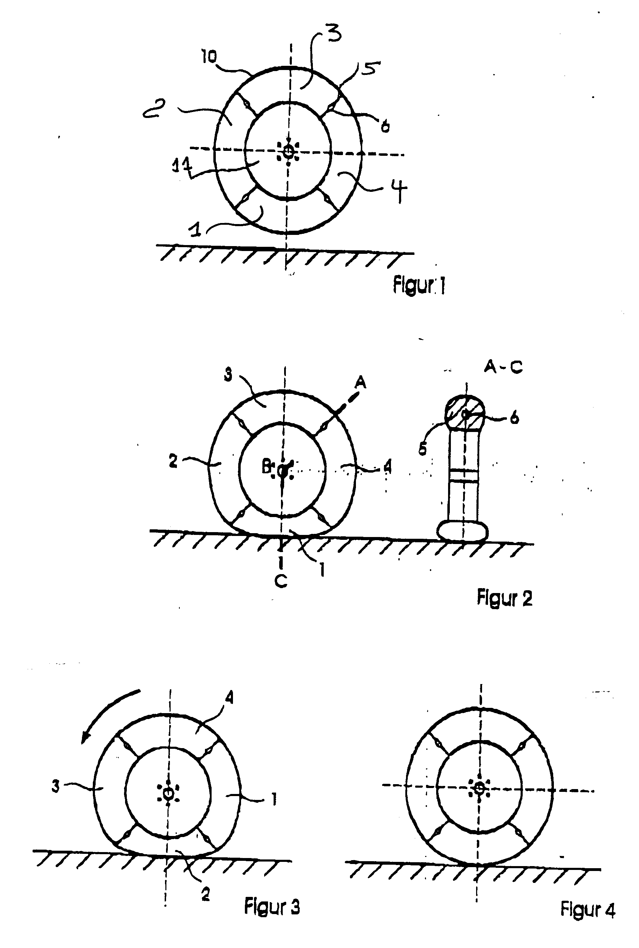

Die erfindungsgemäße Vorrichtung nutzt die Tatsache, dass die oben beschriebenen Anforderungen in der Regel zu unterschiedlich hohen Geschwindigkeiten gefordert werden. Bei hohen Fahrzeuggeschwindigkeiten werden in der Regel die Eigenschaften gefordert, die bei hohen Luftdrücken in den Reifen 10 erreicht werden. Im Gegensatz dazu sind die Geschwindigkeiten auf dem Acker eher niedrig und es werden Anforderungen wie hohe Zugkraftübertragung und geringe Bodenverdichtung wichtig, die bei niedrigen Luftdrücken erreicht werden. Die erfindungsgemäße Vorrichtung nutzt eine weitere Tatsache. Ein durch ein Fahrzeuggewicht belasteter Reifen 10 walkt abhängig vom Reifenluftdruck mehr oder weniger stark. Als Walken wird hier die Verformung des Reifens 10 bezeichnet (siehe Figur 2). Die Rotation des Reifens 10 bei der Bewegung eines Fahrzeuges führt zu einer um den Umfang wandernden Formveränderung des Reifens 10. D.h. es kommt zu einer Stauchung des Reifenquerschnittes im Bereich mit Bodenkontakt (Bereich der Kammer 1 des Reifens 10 in Figur 2) und anschließender Rückverformung in die Form der Bereiche ohne Bodenkontakt. Diese fortlaufende Formveränderung und damit einhergehende Volumenänderung fürt zu Luftströmungen im Innnern des Reifens 10.

Die vorgestellte Erfindung erreicht durch eine Beeinflussung dieser Luftströmungen lokale Luftdruckunterschiede im Innern des Reifens 10. Zu diesem Zweck ist der Reifen 10 in mehrere kammerartige Räume 1-4 aufgeteilt, die durch Einschnürungen 5 voneinander getrennt sind. So ist es erreichbar, dass je Zeiteinheit nur eine bestimmte Luftmenge von Kammer 1-4 zu Kammer 1-4 strömen kann („Luftmenge" = Konst. = Luftdruck (p) • Volumen (V); Im Gegensatz zum Stand der Technik bleibt die Luftmenge in der vorgestellten Erfindung im abgeschlossenen Reifen konstant). Anders ausgedrückt, die Luft benötigt Zeit zum Durchströmen der Einschnürungen 5.

Eine vorteilhafte Ausbildung besteht darin, dass die Einschnürungen 5 nach Art von sich radial erstreckenden Flächen, insbesondere als radiale Trennwände zwischen den kammerartigen Räumen, mit wenigstens einer Durchströmöffnung 6 ausgebildet sind. Vorteilhafterweise und im Sinne einer einfachen Herstellung der Vorrichtung sind die Einschnürungen 5 nach Art von sich radial erstreckenden Flächen, insbesondere als radiale Trennwände zwischen den kammerartigen Räumen, mit wenigstens einer Durchströmöffnung 6 ausgebildet, wobei die Durchströmöffnung wiederumg in einer vorteilhaften und einfachen Ausführung als Drosselöffnung ausgebildet ist.

Durch diesen Aufbau wird nun folgender Effekt erreicht: Bei langsamer Rotation des Reifens 10 ist genügend Zeit für einen Luftmengausgleich von Kammer 1-4 zu Kammer 1-4 vorhanden. Bei entsprechend geringem Reifendruck wird der Reifen 10 stark walken und die gewünschten oben genannten Eigenschaften erreichen. Bei zunehmender Geschwindigkeit des Fahrzeuges und damit zunehmender Rotationsgeschwindigkeit des Reifens 10 ist für einen kompletten Luftmengenausgleich von Kammer 1-4 zu Kammer 1-4 nicht genügend Zeit. Dies führt zu einem erhöhten Reifendruck in der Kammer 1-4 mit Bodenkontakt und führt damit zu geringerem Walkern des Reifens 10. Der Reifeninnendruck bedarf also nur noch einer Anpassung an die jeweilige Achslast und nicht wie bisher an Achslast und Einsatzzweck.

Der gleiche Effekt ergibt sich, wenn in einer weiteren vorteilhaften Ausführung die sich radial erstreckenden Flächen oder radialen Trennwände aus für das Medium mindestens teilweise durchlässigem, insbesondere semipermeablem Material bestehen. Ein solches Material erleichtert die Herstellung der Vorrichtung um ein Vielfaches, da hier keine besonders gestalteten Öffnungen in den Trennwänden vorzusehen sind, sondern das Material selbst begrenzt durchlässig ist, wie es etwa bei dichtem Kunststoffgewebe und Luft der Fall ist.

Zurückkommend auf die Einschnürungen 5 bedeuten diese im Sinne der Erfindung eine beliebige Anordnung zwischen den mindestens zwei kammerartigen Räumen 1-4 des Reifens 10 derart, dass eine Luftströmung durch diese Einschnürung 5 hindurch Zeit benötigt. Vorteilhaft und technisch einfach kann eine solche Anordnung dadurch erreicht werden, dass die Einschnürungen 5 nach Art von angelenkten Klappen ausgebildet sind, die die Luftströmung im Reifen 10 beeinflussen. Mit anderen Worten, beliebige Anordnungen verringern den Querschnitt des Reifens 10 in mindestens zwei Bereichen und lassen pro Zeiteinheit nur einen begrenzten Luftmengenaustausch zu. Die Einschnürungen 5 können auch derart sein, dass sie Verbindungen zwischen zwei nicht unmittelbar benachbarten Kammern 1-4 darstellen.

Neben der Möglichkeit, dass der Reifen 10 und die Einschnürungen 5 eine Einheit bilden, ist eine Aufteilung des Reifens 10 auch durch die Benutzung eines in mehrere Kammern aufgeteilten Schlauches erreichbar. Dieser Schlauch bildet zusammen mit dem Mantel den klassischen Aufbau eines nicht schlauchlosen Reifens.

Darüber hinaus ist auch der Einsatz eines schwammartig aufgeblähten Kunststoffes im Innern des Reifens zur Schaffung der kammerartigen Räume denkbar, mit z.B. einem Schaum mit offenen Zellen oder mit Zellen, deren Zellwände aus mindestens teilweise durchlässigem, insbesondere semipermeablem Material bestehen.

Der erfindungsgemäßen Fahrzeugluftreifen gemäß Anspruch 13 weist einen durch eine Felge und eine Decke oder durch einen Schlauch innerhalb der Decke begrenzten, ringförmigen Luftraum auf, bei dem der Luftraum in Umfangsrichtung des Reifens derart in einzelne Kammern unterteilt ist, daß ein gedrosselter Luftaustausch zwischen den einzelnen Kammern erfolgt.

Eine vorteilhafte Ausbildung besteht dabei darin, dass die Kammern durch Trennwände innerhalb des Reifens gebildet werden, auf einfachste Art durch radiale Trennwände, und über Drosselöffnungen 22 in den Trennwänden 21 miteinander in Verbindung stehen.

Dabei kann die Unterteilung des Luftraums in Umfangsrichtung in unterschiedlicher Weise erfolgen. Der Begriff der Drosselöffnungen steht hier im übrigen für alle Arten von Verbindungen zwischen den einzelnen Kammern, die nur einen gedrosselten Luftdurchlass zulassen. In Betracht kommen daher nicht nur Kammern, die durch radiale Trennwände voneinander getrennt sind, sondern beispielsweise auch schaumige oder zellenförmige Strukturen mit porösen Wänden, die die Luftverbindung von einer zur nächsten Zelle drosseln. Die Begriffe der Kammern und auch diejenigen der Drosselöffnungen sind also weit auszulegen und sollen sich lediglich an dem mit der Erfindung verfolgten Ziel orientieren.

Dazu gehört auch die vorteilhafte Ausbildung, bei der die Kammern durch Trennwände innerhalb des Reifens gebildet werden, und die Trennwände aus mindestens teilweise durchlässigem, insbesondere semipermeablem Material bestehen.

Dieses Ziel besteht, allgemein ausgedrückt, in einer Drosselung oder Bremsung des Luftaustausches innerhalb des Luftraums des Reifens. Dabei soll die Drosselung derart ausgelegt sein, dass bei langsamer Fahrt, also beispielsweise beim Einsatz eines Traktors auf einer Ackerfläche, die Luft aus dem auf den Boden auftreffenden Bereich in die übrigen Bereiche des Reifens unter dem Fahrzeuggewicht ausweichen kann, so dass sich der Reifen eindrückt und die erwünschte größere Auflagefläche sowie das weichere Verhalten erlangt.

Wenn sich das Fahrzeug auf einer festen Straßenoberfläche befindet und die Fahrgeschwindigkeit entsprechend höher ist, soll der erwähnte Luftausgleich nicht mehr möglich sein. Die Luft soll also aus dem jeweils auf die Straßenoberfläche auftreffenden Teil des Reifens nicht mehr rasch genug in andere Umfangsbereiche des Luftraums des Reifens ausweichen können, so dass der Reifen eine härtere Charakteristik erlangt.

Wie bereits erwähnt, kann der Luftraum durch einzelne radiale Trennwände mit in den Trennwänden befindlichen Drosselöffnungen, aber auch durch eine Schaumstruktur mit geeigneter Zellenform und Durchlässigkeit der Zellwände unterteilt sein. Zu diesem Zweck kann beispielsweise ein Schlauch mit integrierten Trennwänden oder integrierter Schaumkonstruktion verwendet werden, oder es kann auch ein ringförmiger Einsatz innerhalb der Decke eines Reifens vorgesehen sein. Es besteht auch die Möglichkeit, den Innenraum eines Reifens nachträglich auszuschäumen und auf diese Weise eine Zellenstruktur mit begrenzt durchlässigen Zellenwänden zu bilden. Dies kann, wie oben bereits dargestellt, beispielsweise mit einem Schaum geschehen, mit offenen Zellen oder mit Zellen, deren Zellwände aus mindestens teilweise durchlässigem, insbesondere semipermeablem Material bestehen.

Soweit hier von Luft und Luftreifen gesprochen wird, liegt es auf der Hand, dass der Begriff der Luft hier stellvertretend für mögliche andere Gase, Gasflüssigkeitsgemische oder Flüssigkeiten steht. Im übrigen ist der erfindungsgemäße Reifen nicht nur für die eingangs erwähnten Acker-, Gelände- und Militärfahrzeuge von Vorteil, die sowohl auf weichem als auch auf festem Untergrund bewegt werden müssen. Vielmehr kann es auch bei Fahrzeugen, die nur auf festen Straßen fahren, zumindest für bestimmte Anwendungsfälle von Vorteil sein, wenn die Reifen bei langsamer Fahrt eine weichere Charakteristik haben, die sich bei schnellerer Fahrt selbsttätig verhärtet. Zu denken wäre hier etwa an Krankenwagen, Chauffeur-Limousinen, Gefahrgutfahrzeuge usw.

Da die mathematische Beschreibung der Erfindung sehr komplex ist, soll im Folgenden die Wirkungsweise anhand veinfacher Modellannahmen beschrieben und werden bevorzugte Ausführungsbeispiele anhand der beigefügten Zeichnung näher erläutert werden.

Figur 1 stellt ein unbelastetes Rad dar, welches aus einer Felge und einem die Felge umfassenden elastischen Reifen 10 aufgebaut ist, wobei der Reifen 10 in vier kammerartige Räume 1-4 unterteilt ist

Figur 2 ein durch ein Fahrzeuggewicht belasteter Reifen in Ansicht und Schnittdarstellung (A - C)

Figur 3 belasteter Reifen (aus Figur 2) nach einer ¼-Umdrehung bei vollständigem Druckausgleich

Figur 4 belasteter Reifen mit gleichmäßiger Luftmenge pro Kammer (aber unterschiedlichen Luftdrücken).

Fig. 5 ist ein schematischer Schnitt durch eine erste Ausführungsform eines erfindungsgemäßen Reifens gemäß Anspruch 13;

Fig. 6 ist eine entsprechende, rein schematische Darstellung einer zweiten Ausführungsform eines erfindungsgemäßen Reifens gemäß Anspruch 13;

Fig. 7    zeigt den Reifen gemäß Fig. 5 mit flachgedrücktem Aufstandsbereich.

In Figur 1 ist ein unbelasteter Reifen 10 auf
einer Felge 11 dargestellt, der beispielsweise in vier
Kammern 1-4 unterteilt ist. Die Luftmenge pro Kammer
1-4 ist gleich und wird für diese Beispielrechnung mit 10
Liter pro Kammer 1-4 angenommen. Figur 2 zeigt den
gleichen, jedoch durch ein Fahrzeuggewicht belasteten
Reifen 10. Beispielhaft ist hier angenommen, dass der
Reifen 10 in der Kammer 1 mit Bodenkontakt bis auf 7
Liter Luftmenge (bzw. 37 Liter im gesamten Reifen 10)
zusammengedrückt wird. Dieser Effekt wird im Allgemeinen als Walken bezeichnet. Des Weiteren ist angenommen, dass es zwischen den Kammern 1-4 zu
einem vollständigen Luftdruckaustausch kommt. Durch
die angenommene Belastung steigt der Luftdruck im
gesamten Reifen 10 gleichmäßig von angenommen 1
bar auf 1,11 bar, berechnet nach Formel:

$$p_2 = p_1 (V_1/V_2)^z$$

p:    Druck
V:    Volumen
z:    Isentropenexponent (bei Luft: 1,40)

Figur 3 zeigt den in Figur 2 dargestellten
Reifen 10 nach einer ¼-Umdrehung. Kontakt mit dem
Boden hat jetzt Kammer 2, Kammer 1 ist entlastet.
Angenommen ist eine für einen vollständigen Druckausgleich zwischen den Kammern 1-4 ausreichend
langsame Rotation des Reifens 10. Dies hat zur Folge,
dass 3 Liter Luft von Kammer 2 nach Kammer 1 strömen. Die Einschnürungen 5 zwischen den Kammern 1-
4 müssen so dimensioniert werden, dass es bei einer
gewünschten Geschwindigkeit des Fahrzeuges noch zu
einem vollständigen Druckausgleich zwischen den
Kammern 1-4 des Reifens 10 kommt. Die Durchflussmenge pro Zeiteinheit lässt sich nach folgender
Formel berechnen:

$$D[L/sec] = (V[m/sec]/\pi d[m]) \cdot Z[L] \cdot k$$

D:    Durchflussmenge
v:    Geschwindigkeit
d:    Durchmesser
Z:    auszutauschende Luftmenge (= 3 Liter im
gewählten Beispiel)
k:    Anzahl der Kammern

So wird es bei einer definierten Größe der
Durchströmöffnung 6 der Einschnürung 5 eine maximale Geschwindigkeit geben, bei der noch ein vollständiger Luftmengen- und damit auch Luftdruckaustausch
innerhalb des Reifens 10 möglich ist. Bei ansteigenden
Geschwindigkeiten wird es bei unveränderter Größe
der Durchströmöffnung 6 nicht mehr zu einem vollständigen Luftmengenausgleich kommen. Das hat zur Folge, dass sich in diesem Beispiel bei endlicher
Beschleunigung und unendlich hoher Geschwindigkeit
die Luftmenge pro Kammer 1-4 gleichmäßig verteilen
wird. Figur 4 zeigt eine gleichmäßige Luftmengenverteilung mit 9,25 Liter Luft pro Kammer 1-4 (= 37 Liter / 4
Kammern). Die größtmögliche Luftmengendifferenz
beträgt somit 32 % (vollständiger Luftmengenausgleich
7 Liter — gleichmäßige Luftmengenverteilung 9,25 Liter
Luft pro Kammer 1-4 in dem gewählten Beispiel). Diese
Luftmengendifferenz pro Kammer 1-4 bei verschiedenen Geschwindigkeiten führt zu unterschiedlich stark
walkenden Reifen 10 und damit zu den gewünschten
Eigenschaften der neuen Vorrichtung.

Weiterhin besteht die Möglichkeit, die Verbindung zwischen den Kammern 1-4 über regelbare
Ventile zu steuern. Damit lassen sich die Eigenschaften
der neuen Vorrichtung aktiv beeinflussen. Beispielsweise kann so ein Walken der Reifen 10 auch bei geringen Geschwindigkeiten unterbunden werden. Durch
eine Vergrößerung der Durchströmöffnung 6 der Einschnürung 5 zwischen den Kammern 1-4 lässt sich
andererseits auch bei hohen Geschwindigkeiten ein
Walken der Reifen 10 erreichen. Dieses ermöglicht beispielsweise bei schlechten Straßenverhältnissen einen
Federeffekt, der durchaus den Einsatz von aufwendigen
Federsystemen, wie gefederte Vorderachsen, erübrigen kann.

Anwendungsgebiet für die beschriebene
Vorrichtung sind Bereiche, wo es von Vorteil ist, bei
unterschiedlichen Fahrzeuggeschwindigkeiten verschieden stark walkende Reifen 10 und die damit verbundenen Eigenschaften zu haben. Damit sind
ausdrücklich auch Anwendungen neben der hier beispielhaft gewählten Landwirtschaft, beispielsweise bei
Bau- und Geländefahrzeugen, denkbar.

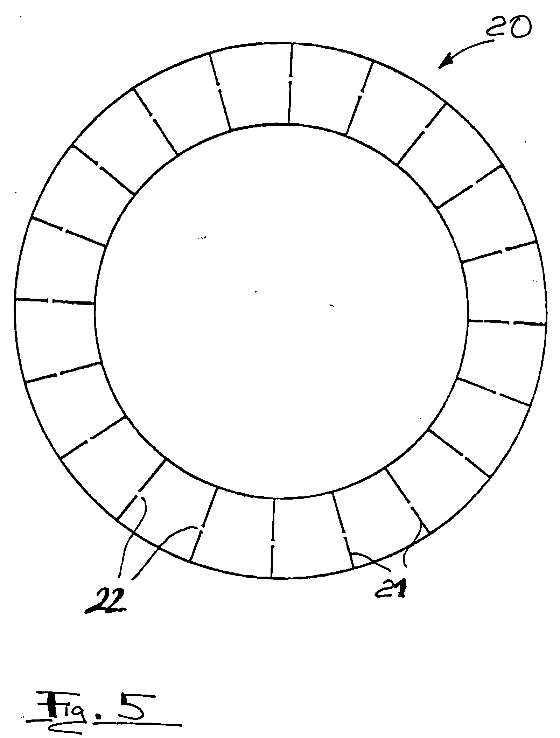

In Fig. 5 ist schematisch ein Reifen 20 als
ringförmiges Gebilde mit einer größeren Anzahl von
radialen Trennwänden 21 veranschaulicht. So können
diese Trennwände 21 beispielsweise unmittelbar in
einem Gummischlauch integriert sein und dieser dann
als Einheit in einer Decke eines Rades eingelegt werden. Ebenfalls rein schematisch ist die Darstellung von
Drosselöffnungen 22 in den einzelnen Trennwänden 21.
Die Drosselöffnungen 22 können einerseits als Düseneinsätze in den Trennwänden ausgebildet sein, jedoch
können die Trennwände 21 auch insgesamt eine leicht
poröse Struktur haben bzw. aus mindestens teilweise
durchlässigem, insbesondere semipermeablem Material bestehen.

Selbstverständlich kann eine solche Ausbildung auch zusätzlich und in Verbindung mit der Ausbildung von Drosselöffnungen oder anderen Ausführungen der Erfindung bereitgestellt werden.

Insgesamt muss die Luft- oder Gas- oder
Mediumsdurchlässigkeit so bemessen sein, dass bei
Raddrehzahlen entsprechend einer Fahrgeschwindigkeit von beispielsweise 10 km/h ein rechtzeitiges Ausweichen der Luft von der jeweiligen Aufstandsfläche zu anderen Bereichen des Reifens möglich ist, während bei höheren Fahrgeschwindigkeiten und damit höheren Raddrehzahlen die Drosselwirkung dazu führt, dass der Luftausgleich nicht oder allenfalls in geringem Maße möglich ist.

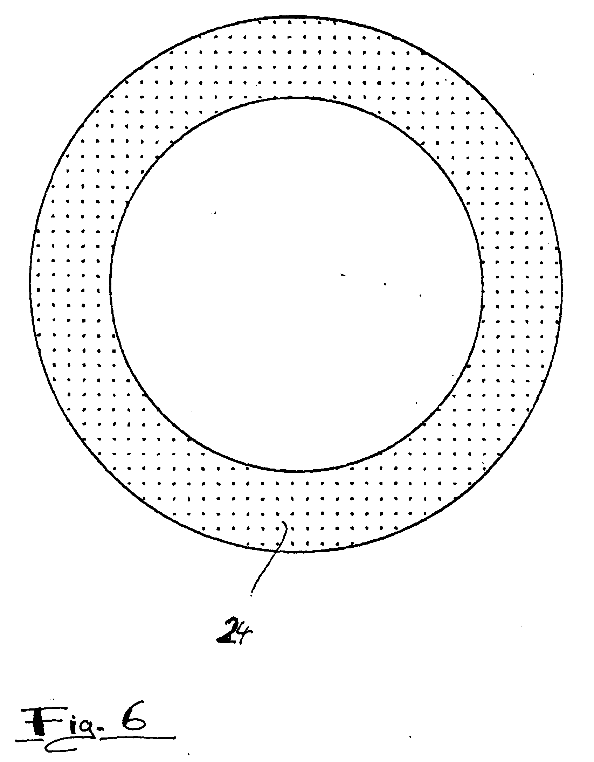

In Fig. 6 veranschaulicht ein Punktraster die Unterteilung des Luftraums im Reifen in eine relativ große Anzahl von Zellen, etwa mit Hilfe eines Schaummaterials 24. Diese Zellenstruktur kann in den Reifen integriert werden oder ggfs. auch nachträglich eingeschäumt werden. Da bei einer derartigen Zellenstruktur die Herstellung einzelner Drosselöffnungen naheliegender Weise nicht möglich ist, muss es sich insgesamt um ein Material mit geringer, aber vorhandener Luftdurchlässigkeit handeln.

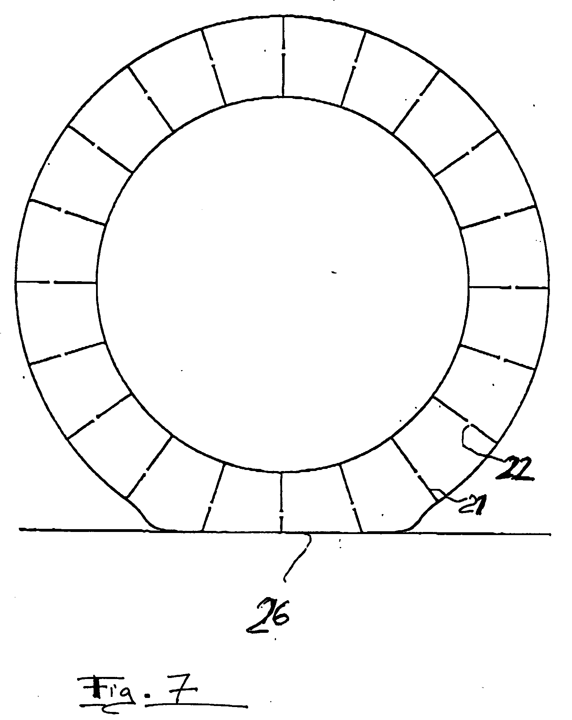

Fig. 7 entspricht Fig. 5, veranschaulicht jedoch, wie ein Reifen im Bereich seiner Aufstandsfläche 26 flachgedrückt wird. Fig. 7 zeigt also etwa den Zustand, der sich bei langsamer Fahrt oder beim Stillstand des Fahrzeugs einstellt. Bei schnellerer Fahrt ist die Verbindung der Aufstandsfläche gering, so dass das Erscheinungsbild des Reifens der Darstellung der Fig. 5 zumindest nahesteht.

**Patentansprüche**

1. Vorrichtung zur Beeinflussung von Eigenschaften eines elastischen Reifens (10), insbesondere eines Reifens (10) eines Fahrzeuges, wobei innerhalb des Reifens (10) ein Medium, beispielsweise Luft, angeordnet ist, **dadurch gekennzeichnet,** dass der Reifen (10) wenigstens zwei kammerartige Räume (1-4) aufweist, die durch Einschnürungen (5) voneinander getrennt sind, durch welche das Medium bei Drehung des Reifens (10) strömt.

2. Vorrichtung nach Anspruch 1, dadurch gekennzeichnet, dass die Einschnürungen (5) nach Art von sich radial erstreckenden Flächen, insbesondere als radiale Trennwände zwischen den kammerartigen Räumen (1-4), mit wenigstens einer Durchströmöffnung (6) ausgebildet sind.

3. Vorrichtung nach Anspruch 1 oder 2, dadurch gekennzeichnet, dass die Durchströmöffnung (6) als Drosselöffnung (22) ausgebildet ist.

4. Vorrichtung nach Anspruch 1 oder 2, dadurch gekennzeichnet, dass die sich radial erstreckenden Flächen oder radialen Trennwände aus für das Medium mindestens teilweise durchlässigem, insbesondere semipermeablem Material bestehen.

5. Vorrichtung nach Anspruch 1 bis 4, dadurch gekennzeichnet, dass die Einschnürungen (5) nach Art von angelenkten Klappen ausgebildet sind, die die Luftströmung im Reifen (10) beeinflussen.

6. Vorrichtung nach Anspruch 1 bis 5, dadurch gekennzeichnet, dass die Einschnürungen (5) Verbindungen zwischen nicht unmittelbar benachbarten Kammern (1-4) darstellen.

7. Vorrichtung nach einem oder mehreren der vorhergehenden Ansprüche, dadurch gekennzeichnet, dass der Aufbau des Reifens (10) einen marktüblichen Mantel und einen Schlauch umfasst, wobei der Schlauch die kammerartigen Räume (1-4) aufweist.

8. Vorrichtung nach Anspruch 7, dadurch gekennzeichnet, dass der Schlauch nicht dem kompletten Volumen des Reifens (10) entspricht.

9. Vorrichtung nach Anspruch 1 bis 3, dadurch gekennzeichnet, dass die Durchströmöffnungen (6) der Einschnürungen (5) nach Art von Ventilen ausgebildet sind und einen Luftaustausch nur in eine Richtung zulassen.

10. Vorrichtung nach Anspruch 4, dadurch gekennzeichnet, dass das mindestens teilweise durchlässige Material einen Luftaustausch nur in einer Richtung zulässt.

11. Vorrichtung nach nach einem oder mehreren der vorhergehenden Ansprüche, dadurch gekennzeichnet, dass die Einschnürungen (5) steuerbar sind.

12. Vorrichtung nach Anspruch 11, dadurch gekennzeichnet, dass die Größe der Durchströmöffnungen (6) der Einschnürungen (5) steuerbar ist.

13. Fahrzeugluftreifen, insbesondere für landwirtschaftliche Fahrzeuge, Baufahrzeuge, Geländefahrzeuge etc., mit einem durch eine Felge und eine Decke oder durch einen Schlauch innerhalb der Decke begrenzten, ringförmigen Luftraum, bei dem der Luftraum in Umfangsrichtung des Reifens derart in einzelne Kammern unterteilt ist, daß ein gedrosselter Luftaustausch zwischen den einzelnen Kammern erfolgt.

14. Fahrzeugluftreifen nach Anspruch 13, dadurch gekennzeichnet, dass die Kammern durch Trennwände innerhalb des Reifens gebildet werden und über Drosselöffnungen (22) in den Trennwänden (21) miteinander in Verbindung stehen.

15. Fahrzeugluftreifen nach Anspruch 13 oder 14, dadurch gekennzeichnet, dass der Luftraum durch radiale Trennwände (21) in einzelne Kammern unterteilt ist, in denen sich die Drosselöffnungen (22) befinden.

**16.** Fahrzeugluftreifen nach Anspruch 13 bis 15, dadurch gekennzeichnet, dass die Kammern durch Trennwände innerhalb des Reifens gebildet werden, wobei die Trennwände aus mindestens teilweise durchlässigem, insbesondere semipermeablem Material bestehen.

**17.** Fahrzeugluftreifen nach Anspruch 13, dadurch gekennzeichnet, dass der Luftraum mit einer Schaum- oder Zellstruktur (24) mit begrenzter Luftdurchlässigkeit gefüllt ist.

Figur 1

A-C

Figur 2

Figur 3

Figur 4

Fig. 5

24

Fig. 6

Fig. 7